# EUROPEAN PATENT APPLICATION

(11) **EP 4 454 736 A1**
(43) Date of publication of application: **30.10.2024**
(21) Application number: 23174668.6
(22) Date of filing: 22.05.2023
(51) Int. Cl.: B01D 53/14, B01D 53/22

(54) **METHOD OF ACID GAS REMOVAL FROM HYDROCARBON GASES**

(30) Priority: 25.04.2023 US 202318138856
(71) Applicant: Unconventional Gas Solutions, LLC, Houston, TX 77064 (US)
(72) Inventor: BIKSON, Benjamin, Newton (MA), 02459 (US)
(74) Representative: Cabinet Laurent & Charras

(57) **Abstract**

A method for treating hydrocarbon feedstock containing acid gas is disclosed, in which acid gases are removed to generate a product specification hydrocarbon stream by a combination of absorption and membrane processes. The absorption process provides for the initial bulk acid gas removal. The partially treated feedstock is further treated by a membrane process to generate a product specification hydrocarbon stream wherein the membrane process provides for the simultaneous removal of acid gas and water vapors. The method is characterized by a reduced separation energy consumption as compared to stand-alone membrane and absorption unit separations. Energy consumption is further reduced by regenerating the rich absorbent to produce a lean absorbent stream depleted of acid gas by way of pressure reduction combined with gas stripping by a non-acid gas component containing gas.

## Description

### FIELD OF THE INVENTION

This invention relates to a method of generating pipeline-specification natural gas from a range of hydrocarbon streams including biogas.

### BACKGROUND OF THE INVENTION

Natural gas is one of the main components of all the primary energy used in the United States. Much raw gas is "subquality," that is, it exceeds pipeline specifications in nitrogen, carbon dioxide, and/or hydrogen sulfide.

A large fraction of hydrocarbon gas streams exceeds the typical acid gas pipeline specification for carbon dioxide of no more than 2% and for hydrogen sulfide below 4 ppm. Before such gas can be sent to the supply pipeline, the carbon dioxide and hydrogen sulfide content must be reduced. Various techniques for acid gas removal, including absorption into an amine solution, cryogenic separation, and membrane separation, have been used in the industry. Each has its own advantages and disadvantages. It is also known to use a combination of these unit separation processes for acid gas removal.

Biogas generation and utilization is an emerging alternative energy technology. Biogas is obtained by a complex degradation process of organic matter that is performed by a set of bacteria under anaerobic conditions. Biogas is produced from a variety of organic materials in plants ranging from sewage treatment plants to organic waste utilization in landfill sites, to farm biogas production that utilizes ecologically pure crops and manure. The resulting gas consists primarily of methane and carbon dioxide together with smaller amounts of other gases and vapors, such as hydrogen sulfide, ammonia, volatile organic compounds (VOCs), and additionally siloxanes for landfill gas. As shown by a considerable number of biogas plants around the world, biogas production and utilization can result in additional available energy with reduced emission of methane and carbon dioxide to the atmosphere and the production of valuable fertilizer. Several biogas utilization methods can be applied. Presently, the most popular approach is the production of Combined Heat and Power (CHP) by means of internal combustion engines. The CHP process can be deployed if heat consumers are in the vicinity of the plant. However, this requirement cannot be met in most cases. As a result, the excess heat energy is frequently vented into the atmosphere lowering the overall energy production efficiency and requiring additional electrical power for heat removal. The biogas upgrading to the pipeline natural gas quality avoids this shortcoming and generates renewable natural gas (RNG). The upgraded biogas is in the form of a natural gas substitute and can be injected into existent natural gas grids or used as a vehicle fuel using the natural gas infrastructure. The upgraded biogas can be distributed at a low cost and utilized with a higher efficiency by customers. However, to generate renewable natural gas, the raw biogas must be upgraded to pipeline specification by removing multiple impurities, where the key impurity and the largest volumetric component is carbon dioxide.

Methods heretofore known for the purification of natural gas and biogas, in particular, carbon dioxide gas removal, may be divided roughly into the following classifications:
(a) Methods involving absorption separation unit operations, wherein water and, in particular, amine absorbent-based water solutions or physical solvents are utilized as an absorption media. In alkanol amine solutions the amine forms weak bonds with the acid gases at relatively low processing temperatures and (usually) elevated pressure. The rich amine solvent is regenerated by decreasing its pressure and increasing its temperature in a stripper, wherein the acid gas components are removed. Absorption using a physical solvent is applied at relatively low temperatures and relatively high pressures, wherein the solubility of the acid gas components is greater than that of light hydrocarbons. The physical solvent is generally regenerated by pressure reduction causing the dissolved gases to flash from the solvent.
(b) Methods involving membrane separation unit operations, wherein the carbon dioxide is removed by preferential permeation through a polymeric membrane.
(c) Methods involving adsorption unit separation operations, wherein the carbon dioxide is removed by a thermal or pressure swing adsorption process. The most common adsorbent is activated carbon but other adsorbents, include zeolites, such as zeolite 5A, molecular sieve carbons, silica gel, activated alumina, or other adsorbents selective for carbon dioxide and gaseous hydrocarbons other than methane.

Membrane units remove carbon dioxide by selective permeation of CO₂ from high pressure to low pressure across a polymeric membrane. Membrane systems have numerous attractive features, such as intrinsic simplicity, the lack of cyclic valve switching, and the ability to generate dry biomethane at elevated pressure. Polymeric membranes can lose treating capacity over time due to exposure to contaminants, such as heavy hydrocarbons, and adsorption processes are commonly used as a pretreatment for the removal of water, heavy hydrocarbons, and other contaminants. The intrinsic simplicity of membrane gas separation processes made them attractive for biogas processing to produce renewable natural gas. However, the efficient removal of carbon dioxide from industrial process streams with a high product recovery by membrane processes requires staging. The membrane staging configuration must be optimized toward the specific application. Optimization of membrane units for removing carbon dioxide from natural gas is reviewed by Anjan K. Datta et al. in Journal of Membrane Science 283 (2006) 291-300. Membrane processes for biogas upgrading have been reviewed by A. Makaruk et al. in Separation and Purification Technology 74 (2010) pp. 83-92. A multistage membrane process for generating high-purity biomethane combined with high recovery from raw biogas is disclosed in U.S. Patent No. 8,999,038. However, there is a disadvantage connected with a high flow of recycled permeated gas that leads to increases in compressor capacity and power consumption. To generate pipeline specification natural gas by a state-of-the-art multi-stage membrane system with high methane recovery, an increase of more than 50% in compressor capacity is required for the feed raw biogas compression.

Purification of biogas by adsorption processes has been used extensively. The bulk carbon dioxide removal is typically carried out by pressure swing adsorption (PSA) utilizing activated carbon. Combining the temperature swing adsorption (TSA) process with a PSA process provides for improved process economics. U.S. Patent No. 4,770,676 describes a process combining a temperature swing adsorption (TSA) process with a PSA process for the recovery of methane from landfill gas. The TSA process removes water and minor impurities from the gas, which then goes to the PSA system, which is similar to U.S. Patent No. 4,077,779, except that the external rinse step has been eliminated. CO₂ from the PSA section is heated and used to regenerate the TSA section. U.S. Patent No. 4,857,083 claims an improvement over U.S. Patent No. 4,077,779 by eliminating the external rinse step and using an internal rinse of secondary product gas (CO₂) during blow-down, and adding a vacuum for regeneration.

In addition to acid gas absorption, solid adsorbents, e.g., molecular sieves, can be employed for the further removal of carbon dioxide in conjunction with the absorption process. Liquid adsorption systems inherently have upper limits on carbon dioxide product concentration that can be below the permissible carbon dioxide concentration. Thus, adsorption is often employed when it is necessary to substantially remove carbon dioxide to levels of about 50 to 200 ppmv carbon dioxide, such as is typically required in liquefaction. In some instances, it can be desirable to eliminate the carbon dioxide absorption unit and perform the carbon dioxide removal by molecular sieve adsorption alone, e.g., for purification where bulk carbon dioxide removal is not required (i.e., natural gas feeds low in acid gas components).

TSA and PSA biogas upgrading adsorption units are comparable to membrane biogas upgrading units in electrical energy consumption, but they have the disadvantage of frequent cyclic valve switches and, therefore, are potentially less reliable due to valve failure.

As noted above, it is well-known to remove acid gases, such as hydrogen sulfide and carbon dioxide, from process streams including biogas using an amine system, wherein the acid gases are scrubbed from the feed with an aqueous amine solvent, with the solvent subsequently stripped of the carbon dioxide or other acid gases in the regeneration step, including via the use of steam. The use of an amine absorption process to treat biogas is disclosed in U.S. Patent No. 6,929,680. These systems are widely used in industry, with hundreds of units in operation worldwide treating natural gas or biogas. These systems are well accepted by the industry, although they are not very easy to operate. Keeping the amine solvents clean, preventing amine degradation by oxygen and other contaminants, as well as solvent foaming that results in the carryover of the solvent into the product gas stream can be issues. A major disadvantage of such systems in biogas and natural gas applications is high thermal energy consumption for the solvent regeneration step, coupled with strict limitations to the upper temperature of the heat transfer medium to prevent thermal degradation of amines.

Aqueous solutions of alkanolamines are the most commonly used chemical absorbents for the removal of acidic gases (CO₂ and H₂S) from biogas, natural gas, and a variety of refinery and synthesis gas streams. Among them, aqueous monoethanolamine (MEA) as a primary amine has been used extensively for this purpose, especially for the removal of CO₂. It has several advantages over other commercial alkanolamines, such as high reactivity, low solvent cost, low molecular weight, and, thus, high absorbing capacity on a mass basis and reasonable thermal stability and thermal degradation rate. The disadvantages of MEA include high enthalpy of reaction with CO₂, leading to higher regeneration energy consumption, and the formation of a stable carbamate. In the presence of oxygen-containing feed gas, MEA forms degradation products; vaporization losses can be high due to high vapor pressure and the solvent is more corrosive in nature than many other alkanolamines and, thus, corrosion inhibitors are needed when used in higher concentrations. Piperazine (PZ) and piperazine-activated alkanolamines are new solvents that provide a higher reaction rate, capacity, and thermal stability than the conventional solvent, monoethanolamine. The superior energy performance of piperazine as compared to MEA has been demonstrated by G. Rochelle et al., Chemical Engineering Journal 171 (2011) 725-733. The use of MDEA+PZ solvent mixture can increase the CO₂ absorption rate significantly and CO₂ heat absorption by MDEA+PZ is lower than that of the primary amines, such as MEA. The MDEA+PZ solvent mixture is considered to have a superior combination of properties as compared to most amine-based systems. (S. Mirzaei at all, Rev Chem Eng, 2015). Alkanolamines have the added advantage of simultaneous removal of carbon dioxide and hydrogen sulfide.

A particular disadvantage of amine solvent treatment for the removal of acid gases is that the solvents are used as a mixture with water, and thus, the product gas generated by the amine treatment plant is saturated in water vapor. This requires downstream dehydration, which most commonly is carried out using glycol solvents that can be followed by an adsorption system, such as a molecular sieve system. Adsorption units using silica gels are used in a wide variety of dehydration applications as well. However, the most common process for dehydration in the natural gas industry is the glycol dehydration process, in which a stream of glycol, for example, triethylene glycol, is contacted against the incoming wet methane gas stream. The glycol solvent extracts water from the stream and a product with reduced water content is produced. The rich glycol stream is subsequently regenerated by pressure reduction and heating, after which it is recycled back as a lean stream to continue its water removal service. Both silica gel and glycol dehydration-based processes require thermal or electrical energy consumption and add operational and capital costs to the gas purification process.

It has been further proposed in U.S. Patent No. 7,442,233, issued to Michael J. Mitariten, to use adsorption as a means of dehydrating sweetened natural gas generated by the amine absorption system, bypassing glycol dehydration. The integrated process of treating raw natural gas disclosed comprises a three-step process involving the adsorption of heavy hydrocarbons and water on an adsorbent bed selective for the same, a subsequent aqueous lean amine treatment for the absorptive removal of acid gases, such as carbon dioxide and hydrogen sulfide, and adsorptive removal of water. The use of a membrane separation step as a bulk CO₂ removal step prior to the amine absorption step is further disclosed.

It is further known to use absorption processes as impurity removal pretreatment steps in natural gas and biogas purification. The removal of heavy hydrocarbons by an absorption process was first disclosed by Mehra in U.S. Patent No. 4,421,535. A biogas purification process that integrates a membrane-based acid gas removal system with an absorption pretreatment system is disclosed by Sandeep K. Karode in U.S. Patent Application Publication No. US 2004/0099138 A1. A high-purity stream of methane can be obtained from a raw gas, such as landfill gas, by a process that includes first removing moisture, then feeding the dried crude gas mixture to a gas-liquid contact absorber to strip heavy hydrocarbon compounds. Methane-enriched gas from the absorber is separated in a membrane separation unit, which provides a purified product stream of methane and a permeate enriched in carbon dioxide that is liquified and recycled to the absorber.

To optimize acid gas removal process economics, a combination of several gas separation unit operations has been deployed by the industry, including a combination of membrane and absorption processes. S.R. Dunne et al., in U.S. Patent No. 8,454,727, disclose a hybrid process for carbon dioxide removal, wherein a membrane system is used for bulk CO₂ gas removal, followed by an adsorption process. It is known to use an integrated membrane/absorption process for acid gas conditioning, wherein membrane units are used as bulk CO2 removal devices, followed by amine processing for final CO₂ removal to target product specification. In this configuration, the first stage of raw gas treatment consists of a pretreatment system to adjust the gas dew point to remove heavy hydrocarbons, contaminants, and water, followed by a membrane unit for bulk CO₂ removal, followed by an amine system for the final acid gas removal. The amine unit in this application re-introduces water vapor back into the product natural gas and, thus, down-stream dehydration is subsequently required. The process economics of stand-alone amine systems and membrane systems as compared to a hybrid membrane/amine system for natural gas treatment is described by W. Echt, "Hybrid technologies: combining technologies leads to more efficient gas conditioning", 2002 Laurance Reid Gas Conditioning Conference. The economics of stand-alone amine absorption, stand-alone membrane process, and a hybrid amine/absorption process for CO₂ removal from natural gas are discussed by R. Baker et al. in Ind. Eng. Chem. Res. 2008, 47, 2109-2121.

A hybrid membrane-absorption process for CO₂ capture from flue gases with carbon dioxide to be sequestered is described by B. Freeman et al. in Energy Procedia v. 63 (2014) pp. 605 - 613. In the series absorber and membrane configuration, the absorber is used to remove about half of the CO₂ from the flue gas, followed by additional separation by the membrane system in a form of a contactor. The contactor is assisted by permeate side sweep to achieve 90% total removal of CO₂ by the hybrid capture system. In this arrangement, the absorber operates at a higher lean-loading state and can be roughly half the size as compared to a conventional absorption process. This is important since the flue-gas system is available at near-atmospheric pressure. Another key feature is that the amine solution regeneration process is conducted at a high temperature (150°C) and pressure (5-10 bar) that is favorable for down-line CO₂ sequestration. This hybrid configuration described by Freeman et al. is optimized for carbon capture for purpose of sequestration and is not applicable to the treatment of biogas or natural gas to produce a pressurized high-purity methane product.

The use of auxiliary external gas stripping to aid the regeneration of physical adsorbents and amine solutions is disclosed in the art but there is no broad commercial use of the process. A process of regenerating water used as an absorbent to remove CO₂ from a raw feed gas by pressure reduction combined with stripping by the atmospheric air is disclosed in the WIPO patent application WO 2008/115079 A1. The use of a secondary air stripper to aid the regeneration of the amine solvent in a CO₂ removal process from flue gas following a partial thermal regeneration is described by J.R. Heberle et al. in Energy Procedia 114 (2017) pp. 1069 - 1074. The gas mixture comprised of carbon dioxide and stripping air is further sent to the boiler to increase the concentration of CO₂ in the flue gas that is sent to the main amine absorber in the CO₂ carbon sequestration process. The air stripping did not find broad use in amine-based processes of acid gas removal due to the high oxidative degradation of amines in presence of oxygen that takes place at regeneration temperatures higher than 100 °C.

The presence of oxygen in the raw feed gas stream presents problems for traditional absorption processes due to low oxygen solubility in absorbent liquids. In addition to triggering absorbent degradation, oxygen is not removed from the feed. The product line oxygen specification thus can be exceeded by the residual oxygen in the product gas. This is a significant deficiency of absorption processes as compared to other unit separation operations such as membrane-based gas separation that can remove oxygen by preferential permeation.

However, there is still a need for an improved energy-efficient biogas treatment process that overcomes the limitations of the prior art. State-of-the-art membrane systems are characterized by high electrical power consumption related to recycled gas recompression. State-of-the-art amine-based absorption processes in biogas purification are characterized by high thermal energy consumption required to regenerate the absorbent solution.

### SUMMARY OF THE INVENTION

The present invention provides an integrated process that combines absorption and membrane separation for the removal of acid gases from a broad range of acid gas-containing hydrocarbon streams, including natural gas, associated gas, and biogas. The bulk amount of acid gases, which may include carbon dioxide and hydrogen sulfide, are removed by an absorption process step, followed by a membrane purification step that completes the removal of acid gases while simultaneously dehydrating the product hydrocarbon stream to the target product specification. The individual separation unit operations and their combination are optimized to reduce the overall energy consumption of upgrading the hydrocarbon product stream to pipeline specification with respect to the efficiency and reliability of the process. Energy consumption is further reduced by regenerating the rich absorbent to produce a lean absorbent stream depleted of acid gas by way of pressure reduction combined with gas stripping by a non-acid gas component containing gas.

One embodiment of the method for the purification of a raw feed gas stream containing hydrocarbons and acid gas comprises the steps of:
(i) compressing a raw feed gas stream in a compressor to a pressure from 3 to 25 barg followed by aftercooling and condensate separation, thereby forming a first effluent stream;
(ii) passing the first effluent stream into a gas absorption unit, wherein a lean absorbent removes a portion of acid gas from the first effluent stream, thereby forming a second effluent stream having a lower acid gas content than the first effluent stream and a rich in acid gas absorbent stream;
(iii) passing the second effluent stream to a membrane separation unit containing a polymeric membrane selective for removal of acid gas and water, wherein the membrane separation unit generates a retentate hydrocarbon product stream and a permeate reject stream enriched in acid gas and water vapor;
(iv) passing the rich in acid gas absorbent stream to an absorbent regeneration unit to generate a lean absorbent stream depleted of acid gas by way of pressure reduction combined with gas stripping by a non-acid gas component containing gas at substantially atmospheric pressure or a sub-atmospheric pressure thus, forming a third effluent stream of acid gas and sweep gas mixture;
(v) passing the lean absorbent stream to the gas absorption unit;
(vi) passing the permeate reject stream to a front end of the compressor, wherein the permeate reject stream is mixed with the raw feed stream; and
(vii) collecting the retentate hydrocarbon gas as a product stream.

In another embodiment of the invention, the method for the purification of raw feed gas stream containing hydrocarbons and acid gas available at a pressure above 3 barg comprises the steps of:
(i) passing the raw feed gas into a gas absorption unit, wherein a lean absorbent removes a portion of acid gas from the raw feed gas, thereby forming a first effluent stream having a lower acid gas content than the raw feed gas and a rich in acid gas absorbent stream;
(ii) passing the first effluent stream to a membrane separation unit containing a polymeric membrane selective for removal of acid gas and water, wherein the membrane separation unit generates a retentate hydrocarbon product stream and a permeate reject stream enriched in acid gas and water vapor;
(iii) passing the rich in acid gas absorbent stream to an absorbent regeneration unit to generate a lean absorbent stream depleted of acid gas by way of pressure reduction combined with gas stripping by a non-acid gas component containing gas at substantially atmospheric pressure or a sub-atmospheric pressure, thus forming a third effluent stream of acid gas and sweep gas mixture;
(iv) passing the lean absorbent stream to the gas absorption unit;
(v) passing the permeate reject stream to a compressor and compressing the permeate reject stream to a pressure not lower than that of the raw feed gas pressure;
(vi) passing the compressed permeate reject stream to a front end of the gas adsorption unit, wherein the compressed permeate reject stream is mixed with the raw feed stream;
(vii) collecting said retentate hydrocarbon gas as a product stream; and
(viii) optionally processing the third effluent stream to recover carbon dioxide.

The acid gas may be comprised of carbon dioxide, hydrogen sulfide, or a mixture thereof. The feedstock hydrocarbon stream may further contain organosulfur compounds and other sulfur-based impurities, such as mercaptans. The pipeline natural gas typically contains 0.5 grains of total sulfur or less per 100 cubic feet of gas with total non-hydrocarbons of 2% or less. The novel aspect of the present invention is the combination of absorption and membrane unit separation operations that provides for the overall reduction in energy consumption to generate a product specification hydrocarbon stream.

The energy consumption is further reduced by an optimized method of rich absorbent regeneration. The absorbent liquid rich in acid gas is regenerated by way of pressure reduction, i.e., by reducing the pressure of the rich absorption liquid, which regeneration can take place in one or more flash-regeneration units. The level of pressure reduction must be sufficient to enable the removal of acid gas from the effluent stream in the absorption unit to the target level sufficient for the membrane unit to generate a product specification hydrocarbon stream. Namely, the level of acid gas in the effluent stream of the absorption unit must be sufficiently low to enable the removal of the acid gas to the final product specification by the membrane unit downstream.

The final flash regeneration step is carried out by way of pressure reduction combined with gas stripping by a non-acid gas component containing gas at substantially atmospheric pressure or sub-atmospheric pressure. The non-acid stripping gas can be air, nitrogen, nitrogen-enriched air or other non-acid gases mixtures, such as fuel gas. The pressure of the acid gas and stripping gas mixture may be reduced to an atmospheric or sub-atmospheric level. In some embodiments, the flash regeneration can be further assisted by the application of additional secondary heat from a compressor cooling system or another heat source. Flash regeneration assisted by the application of additional secondary heat is defined as regeneration by way of pressure reduction.

It is further with the scope of the invention to regenerate the rich absorbent liquid in two or more flash-regeneration units, wherein each regeneration unit may be maintained at a different pressure reduction level. The regeneration efficiency in one of the regeneration units may be further aided by way of additional secondary heat application to affect a deeper regeneration level. The waste compressor heat may be used as one mechanism of heat application.

The method of the instant invention is characterized by low energy consumption in the absorbent regeneration process step. This is accomplished by utilizing absorbents with acid sorption characteristics that exhibit a strong pressure dependency. Thus, the regeneration step can be carried out without heat energy input or with low supplemental energy input utilizing a secondary heat source, such as available from the feed compressor cooling system. The combination of the absorption step that does not require external energy input for the absorbent regeneration, followed by the membrane separation step that is characterized by a low permeate recycle volume, allows for a reduction in the overall system energy consumption which is further aided by gas stripping by a non-acid gas component containing gas.

It is within the scope of the invention to process effluent from the absorption unit in one or more membrane separation units that can be arranged in series or in parallel. The individual membrane separation units may contain polymeric membranes with the same or different separation characteristics. It is further within the scope of the invention to operate individual membrane separation units at different stage cuts and/or temperatures. The membrane selection and process conditions are optimized toward the removal of carbon dioxide, hydrogen sulfide, water vapor, oxygen, or other impurities that may be present in the feed stream. The membrane separation unit separates carbon dioxide, hydrogen sulfide, water vapor, and other gaseous impurities by selective permeation through a gas-selective membrane, wherein impurities are removed into the low-pressure permeate stream and the methane product is recovered as a high-pressure retentate/non-permeate stream.

The above and other features of the invention, including various novel details of construction and combinations of parts, and other advantages, will now be more particularly described with reference to the accompanying figures and pointed out in the claims. It will be understood that the particular method and articles embodying the invention are shown by way of illustration and not as a limitation of the invention. The principles and features of this invention may be employed in various and numerous embodiments without departing from the scope of the invention.

### BRIEF DESCRIPTION OF THE DRAWINGS

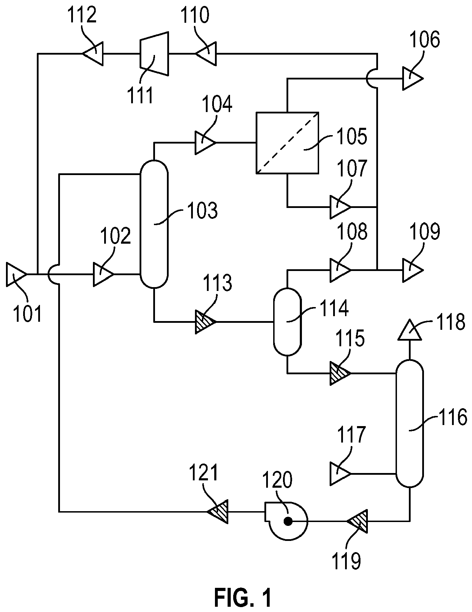

FIG. 1 is a schematic drawing of one embodiment of the invention wherein a high-pressure acid gas containing hydrocarbon stream is treated by a method according to this invention in a system comprised of an absorption unit, an absorbent regeneration unit, a membrane separation unit, and a compressor for the membrane permeate gas recycle. The rich absorbent regeneration is carried out by way of pressure reduction combined with non-acid gas stripping.

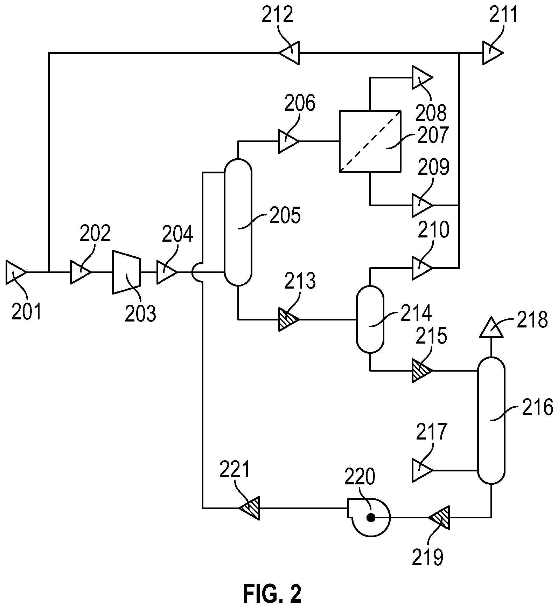

FIG. 2 is a schematic drawing depicting another embodiment of the invention of treating a low-pressure acid gas containing hydrocarbon stream that includes a compressor, an absorption unit, an absorbent regeneration unit, and a membrane separation unit where the membrane permeate gas is recycled to the front end of the compressor. The rich absorbent regeneration is carried out by way of pressure reduction combined with non-acid gas stripping.

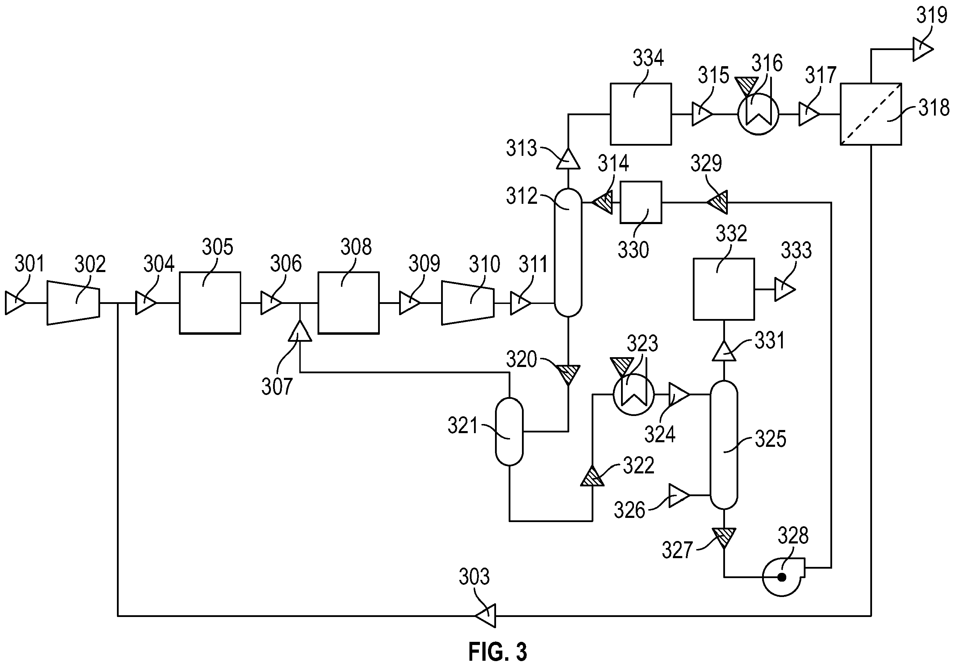

FIG. 3 is a schematic drawing depicting another embodiment of the invention of treating acid gas containing hydrocarbon stream that includes a compressor, an absorption unit integrated with two flash regeneration units that further include a secondary heat application and regeneration of by way of pressure reduction combined with non-acid gas stripping. The system further includes a biological treatment unit to remove hydrogen sulfide prior to gas compression, wherein the biological treatment is aided by oxygen enrich permeate stream generated by the membrane unit.

### DETAILED DESCRIPTION OF THE PREFERRED EMBODIMENTS

The method of the present invention provides an improved process of producing product specification hydrocarbon streams from hydrocarbon streams containing acid gas components. The method can generate pipeline-specification natural gas, including Renewable Natural Gas (RNG) from biogas. The acid gas is removed by a combination of absorption and membrane processes. The absorption process provides for the initial bulk acid gas removal. The membrane process provides for the simultaneous removal of acid gas and water vapors to pipeline specification. The membrane process can be further designed to remove additional impurities that may be present in the gas mixture, including oxygen and mercaptans. The acid gas and other impurities can be removed in a single-stage membrane system or in a sequence of multiple membrane stages, wherein each stage is equipped with membranes selective towards target impurities. The method is characterized by a reduced separation energy consumption as compared to stand-alone membrane and absorption unit separations for biogas upgrading.

Some high-pressure hydrocarbon acid gas containing streams, such as natural gas raw gas streams, are available at feed gas pressures ranging from 6 to 160 barg. High-pressure feed gas streams typically do not require compression, but may require pretreatment to remove certain contaminants. The high-pressure feed streams are treated by the method of the invention by a combination of absorption followed by a membrane purification, wherein the permeate gas generated by the membrane system is recompressed and combined with the feed gas stream. In some embodiments a fraction of the permeate stream can be utilized as fuel gas on site.

Low-pressure hydrocarbon acid gas containing streams, such as biogas gas raw gas streams, must be compressed prior to acid gas removal by the method of the invention. The raw feed gas may be treated to remove a number of impurities prior to compression or following compression. The raw feed gas is compressed to a pressure from about 3 barg to about 25 barg prior to being treated by the method of the invention.

The raw hydrocarbon gas mixture predominantly consists of methane and higher hydrocarbons and acid gases. The acid gas content of the hydrocarbon stream can be comprised of carbon dioxide, hydrogen sulfide or a combination thereof. The concentration of carbon dioxide in some hydrocarbon streams can be as high as 80%. For the biogas streams, the carbon dioxide concentration does not exceed 60%.

The carbon dioxide concentration varies from above 2% to as high as 80%, more commonly from 5% to 55%. The carbon dioxide must be removed and the caloric value of the product gas increased prior to injecting the product into the distribution grid. The carbon dioxide concentration must be removed to meet the local pipeline specification, which can vary from 5% to 2% mol. Some hydrocarbon feeds, such as the biogas gas, may contain a significant concentration of inert impurities, such as nitrogen. The product gas carbon dioxide concentration may need to be removed further to meet the pipeline's total inert gas concentration limit. The excess nitrogen can be removed in a post-purification step via a membrane or Pressure Swing Adsorption (PSA) system as well.

The raw hydrocarbon stream can further contain a significant amount of hydrogen sulfide and other sulfur-containing impurities that must be removed to meet customer product specifications. The hydrogen sulfide concentration can be as low as 10 ppm or as high as 8% and above for some hydrocarbon streams, such as the associated natural gas. To meet the pipeline natural gas specification the concentration of impurities must be reduced to a typical pipeline specification of hydrogen sulfide: 0.25-0.3 g/100 scf (6-7 mg/m³); total sulfur: 5-20 g/100 scf (115-460 mg/m³); water vapor: 4.0-7.0 lb/MM scf (60-110 mg/m³), and oxygen: 1.0% or less with total non-hydrocarbons content of 2% or less.

The hydrocarbon product must be generated at pipeline pressure. If the raw feed gas is available at a low pressure, which is typical for biogas or associated gas, the feed gas is compressed prior to acid gas removal to a pressure optimal for the acid gas removal process. This optimal pressure may be below the desirable pipeline pressure and further recompression of the product hydrocarbon gas may be required prior to injection into the pipeline. The compression of the raw feed gas prior to acid gas removal is not required if the gas is available at a desired high pressure already. The raw feed gas is most commonly compressed to pressures between 6 to 25 barg prior to acid gas removal. The efficiency of both absorption and membrane processes increases with an increase in the feed gas pressure. However, the overall system energy consumption can increase by compressing the feed raw biogas to a pressure above 25 barg. If the product gas must be injected into a trunk pipeline with a higher pipeline pressure, a booster compressor can be deployed. Operating the absorption system at a pressure below 6 barg makes the absorption process by way of pressure reduction inefficient. Thus, the 6 to 25 barg pressure range is considered preferable for the method of the invention, where the feed gas is available at a low pressure and required compression.

The raw feed gas can further contain a number of impurities in variable concentrations that must be removed prior to the product being injected into the grid. For biogas, these impurities may include, in addition to acid gas, siloxanes, volatile organic hydrocarbons, ammonia, and water vapor, among others. These impurities are removed by methods well known in the art and can include adsorption by activated carbon, water wash, and/or a combination of treatment steps. These impurities are removed prior to biogas compression or, alternatively, following biogas compression. It is also within the scope of the invention to remove some impurities prior to compression, while removing the rest of the impurities following compression. When the impurities are removed prior to compression, the pressure of the raw biogas may be increased to enable efficient processing. The pressure may be increased by way of a gas blower or a separate compressor, but typically will not exceed 0.5 barg. In one example, the ammonia present in the biogas is removed by way of a water wash prior to compression, while the remaining impurities are removed by adsorption following biogas compression.

The principal method of the invention as applied to the treatment of a high-pressure hydrocarbon feed gas stream is described with reference to Figure 1. The raw high-pressure hydrocarbon feed stream is designated as (101). The raw hydrocarbon feed stream (101) is combined with the recycle stream (112) to form a combined feed stream (102) which is treated in the absorption unit (103). The combined stream is fed into the lower part of the absorber (103), wherein it is contacted with the lean absorbent liquid. The gas stream is passed countercurrent to the lean absorbent liquid and forms the first effluent stream (104) depleted of acid gases that is removed at the top of the column. To improve the efficiency of heat and mass transfer between the gas and the liquid, tray columns or columns with regular or irregular structured packing can be used in the absorber vessel. The absorbent liquid temperature increases as a result of carbon dioxide absorption. To increase the absorbent's loading, the absorbent liquid can be cooled in the intermediate sections of the absorption vessel. The acid gas concentration in the first effluent stream (104) can be lowered by a factor of 2 to 50 as compared to the acid gas concentration in the raw hydrocarbon feed stream (101).

The regeneration of the rich absorbent stream (113) is carried out by flash regeneration in a series of absorbent liquid regeneration units (114) and (116). In some embodiments, the regeneration is carried out in only one regeneration unit wherein the degree of regeneration is increased via the utilization of non-acid gas containing sweep gas. The rich absorbent liquid (113) is directed into the first flash regeneration vessel (114), wherein the initial regeneration at above atmospheric pressure takes place. The relatively small flash gas stream (108), containing carbon dioxide and hydrocarbons, is combined with the membrane permeate gas stream (107) to form the combined gas stream (110) that is fed into the compressor (111). The recompressed stream (112) is combined with the feed gas to be treated in the absorption system. In some embodiments, a fraction of the stream (109) is withdrawn and used as fuel.

The rich absorbent liquid stream (115) that underwent a partial regeneration is removed from the bottom of the first flash regeneration vessel and is directed into a second flash regeneration vessel (116), wherein the pressure of the absorption liquid is reduced to atmospheric pressure or a sub atmospheric pressure and wherein a non-acid gas containing steeping gas (117) is introduced at a bottom of the vessel to aid in regeneration. The lean absorption liquid (119) is removed from the bottom of the vessel. The pump (120) directs the lean absorption liquid via an optional heat exchanger (not shown), wherein the lean absorption liquid is cooled. Thus formed, the lean absorption liquid (121) is optionally filtered in the filter (not shown), where impurities and degradation products are removed and injected into the top section of the absorption vessel (103). The gas stream comprised of acid gas and non-acid gas containing striping gas generated during flash regeneration in vessels (116) forms the stream (118). The stream is vented to the atmosphere or processed to remove harmful impurities such as hydrogen sulfide prior to venting. In some embodiments, the stream is processed to generate a separate product.

The regeneration of the absorption liquid in the flash regeneration units (114 and 116) is carried by way of pressure reduction or via a combination of pressure reduction and stripping, wherein a fraction of the absorbed acid gas is released which leads to the liquid's temperature decrease. The absorption liquid characteristics, the liquid's loading, and temperature affect acid gas desorption efficiency. The absorption liquid characteristics and process conditions are selected to remove at least 10 mass percent of carbon dioxide from the rich absorption liquid into the desorbed acid gas stream (118) by way of liquid pressure reduction to the atmospheric pressure. Absorbents that exhibit high CO₂ loading and show a strong dependence of CO₂ loading on pressure are preferred. It is known in the art to utilize aqueous amine solutions and physical absorbents as the absorption liquid media with high loading and lading pressure dependency.

The first effluent stream (104) is further treated in a membrane separation unit (105) that contains a polymeric membrane selective toward the removal of carbon dioxide, water vapor, and hydrogen sulfide from methane and other hydrocarbons. The acid gases and water vapor remaining in the first effluent stream are removed by permeation to generate the hydrocarbon product stream (106) that meets the product specification. The permeate stream (107) containing some residual methane is combined with stream (108) to form a combined stream (110) that is recycled to the front intake of the compressor (111).

The membrane separation unit is comprised of one or more membrane separation modules arranged in series or in parallel. It is within the scope of the invention two deploy separation modules in series wherein each module contains membranes tailored to the separation of hydrogen sulfide and carbon dioxide. The modules are equipped with semipermeable membranes exhibiting CO₂/CH₄ and H₂S/CH₄ gas separation factors above 25, preferably above 35, and most preferably above 45, as measured at room temperature. The membranes further exhibit a high-water vapor/methane selectivity of 200 or more. In some embodiments, it is desirable to remove other impurities, such as siloxanes or residual oxygen, by the membrane unit. For efficient oxygen removal, membrane modules equipped with membranes exhibiting an oxygen/methane separation factor of above 5, preferably above 6, as measured at room temperature should be utilized. The gas separation efficiency is affected by the pressure ratio, i.e., the feed gas to the permeate gas pressure. To maintain the high pressure ratio, the permeate gas is collected at low pressure, not to exceed the compressor intake pressure.

The membranes preferably operate in a counter-current mode to increase separation thermodynamic efficiency and reduce the volume of the recycled permeate gas. It is further within the scope of the invention to deploy membranes with different separation characteristics in sequential stages. It is known to utilize the permeate gas of the subsequent membrane stage as a purge gas on the permeate side of the preceding membrane stage to improve separation efficiency. The operation temperature in each membrane stage may be the same or different to optimize the overall separation efficiency. The gas may be preheated or cooled between stages to control the temperature. In some embodiments, it may be desirable to increase the separation efficiency of the membrane unit using the permeate side sweep with a fraction of the retentate gas. Each module has a polymeric membrane with a defined high-pressure side and low-pressure side, each module has an inlet port connected to the high-pressure side, a retentate outlet port, and a permeate outlet port, therein the retentate outlet port providing an outlet for gas on the high-pressure side, and the permeate outlet port providing an outlet for gas on the low-pressure side. The feed gas is conveyed into the inlet port, the retentate gas is conveyed from the retentate outlet port, and the permeate gas is conveyed from the permeate port wherein a portion of the retentate gas from the retentate outlet is conveyed into the low-pressure permeate side while the remainder of the retentate gas from the retentate port is conveyed to a pipeline. The fraction of the retentate gas conveyed to the permeate side is controlled to affect retentate product purity.

Another principal method of the invention as applied to the treatment of a low-pressure hydrocarbon feed gas stream is described with reference to Figure 2. The raw hydrocarbon feed stream is designated as (201). The raw hydrocarbon feed stream (201) is combined with the recycle stream (212) and the combined gas stream (202) is fed into the intake of the compressor (203). The combined gas stream (202) is compressed to the target pressure determined by the pressure in the receiving product pipeline followed by aftercooling and condensate separation (not shown). The compressed gas forms the first effluent stream (204). Compressed, cooled, and condensate separated, the raw gas stream forming the first effluent stream (204) is fed into the lower part of the absorber (205), wherein it is contacted with the lean absorbent liquid. The first effluent stream (204) is passed countercurrent to the lean absorbent liquid and forms the second effluent stream (206) depleted of acid gases that are removed at the top of the column. To improve the efficiency of heat and mass transfer between the gas and the liquid, tray columns or columns with regular or irregular structured packing can be used in the absorber vessel. The absorbent liquid temperature increases as a result of carbon dioxide absorption. To increase the absorbent's loading, the absorbent liquid can be cooled in the intermediate sections of the absorption vessel. The acid gas concentration in the second effluent stream (206) can be lowered by a factor of 2 to 50 as compared to the initial concentration in the raw hydrocarbon feed stream (201).

The regeneration of the rich absorbent stream (213) is carried out by flash regeneration in a series of absorbent liquid regeneration units (214) and (216). In some embodiments, the regeneration is carried out in only one flash regeneration unit, wherein the degree of regeneration is increased via the utilization of non-acid gas containing sweep gas. The rich absorbent liquid (213) is directed into the first flash regeneration vessel (214), wherein initial regeneration at above atmospheric pressure takes place. The relatively small flash gas stream (210), containing carbon dioxide and methane, is combined with the membrane permeate gas stream (209) to form the combined gas stream (212) recycled to the front end of the compressor to increase methane recovery. In some embodiments, a fraction of the stream (211) is withdrawn and used as fuel.

The rich absorbent liquid stream (215) that underwent a partial regeneration is removed from the bottom of the first flash regeneration vessel and is directed into a second flash regeneration vessel (216), wherein the pressure of the absorption liquid is reduced to atmospheric pressure or a sub-atmospheric pressure and a non-acid gas containing steeping gas (217) is introduced at a bottom of the vessel. The regeneration efficiency can be enhanced by increasing the temperature of the absorption liquid to compensate for the temperature decrease caused by the acid gas desorption. The lean absorption liquid (219) is removed from the bottom of the vessel. The pump (220) directs the lean absorption liquid via an optional heat exchanger (not shown), wherein the lean absorption liquid is cooled. Thus formed, the lean absorption liquid (221) is optionally filtered in the filter (not shown), where impurities and degradation products are removed and injected into the top section of the absorption vessel (205). The gas stream comprised of carbon dioxide and non-acid gas containing striping gas generated during flash regeneration in vessels (216) forms the stream (218). The stream is vented to the atmosphere or processed to remove harmful impurities such as hydrogen sulfide prior to venting. In some embodiments, the stream is processed to generate a separate product.

The regeneration of the absorption liquid in the flash regeneration units (214 and 216) is carried by way of pressure reduction or via a combination of pressure reduction and stripping, wherein a fraction of the absorbed acid gas is released which leads to the liquid's temperature decrease. The absorption liquid characteristics, the liquid's loading, and temperature affect CO₂ desorption efficiency. The absorption liquid characteristics and process conditions are selected to remove at least 10 mass percent of carbon dioxide from the rich absorption liquid into the desorbed acid gas stream (210) by way of liquid pressure reduction to the atmospheric pressure. Absorbents that exhibit high CO₂ loading and show a strong dependence of CO₂ loading on pressure are preferred. It is known in the art to utilize aqueous amine solutions and physical absorbents as the absorption liquid media with high loading and lading pressure dependency. The lean absorbent liquid (219) is transported via pump (220) to the top of the absorption unit (205).

The second effluent stream (206) is further treated in a membrane separation unit (207) that contains a polymeric membrane selective toward the removal of carbon dioxide, water vapor, and hydrogen sulfide from methane and other hydrocarbons. The acid gases and water vapor still remaining in the second effluent stream are removed by permeation to generate the hydrocarbon product stream (208) that meets the product specification. The permeate stream (209) containing some residual methane is combined with stream (210) to form a combined stream (212) that is recycled to the front intake of the compressor (203).

The membrane separation unit is comprised of one or more membrane separation modules arranged in series or in parallel. It is within the scope of the invention to deploy separation modules in series wherein each module contains membranes tailored to the separation of hydrogen sulfide and carbon dioxide. The modules are equipped with semipermeable membranes exhibiting CO₂/CH₄ and H₂S/CH₄ gas separation factors above 25, preferably above 35, and most preferably above 45, as measured at room temperature. The membranes further exhibit a high-water vapor/methane selectivity of 200 or more. In some embodiments, it is desirable to remove other impurities, such as siloxanes or residual oxygen, by the membrane unit. For efficient oxygen removal, membrane modules equipped with membranes exhibiting an oxygen/methane separation factor of above 5, preferably above 6, as measured at room temperature should be utilized. The gas separation efficiency is affected by the pressure ratio, i.e., the feed gas to the permeate gas pressure. To maintain the high pressure ratio, the permeate gas is collected at low pressure, not to exceed the compressor intake pressure.

The membranes preferably operate in a counter-current mode to increase separation thermodynamic efficiency and reduce the volume of the recycled permeate gas. It is further within the scope of the invention to deploy membranes with different separation characteristics in sequential stages. It is known to utilize the permeate gas of the subsequent membrane stage as a purge gas on the permeate side of the preceding membrane stage to improve separation efficiency. The operation temperature in each membrane stage may be the same or different to optimize the overall separation efficiency. The gas may be preheated or cooled between stages to control the temperature. In some embodiments, it may be desirable to increase the separation efficiency of the membrane unit by the use of the permeate side sweep with a fraction of the retentate gas. Each module has a polymeric membrane with a defined high-pressure side and low-pressure side, and each module has an inlet port connected to the high-pressure side, a retentate outlet port, and a permeate outlet port, therein the retentate outlet port providing an outlet for gas on the high-pressure side, and the permeate outlet port providing an outlet for gas on the low-pressure side. The feed gas is conveyed into the inlet port, the retentate gas is conveyed from the retentate outlet port, and the permeate gas is conveyed from the permeate port, wherein a portion of the retentate gas from the retentate outlet is conveyed into the low-pressure permeate side while the remainder of the retentate gas from the retentate port is conveyed to a pipeline. The fraction of the retentate gas conveyed to the permeate side is controlled to affect retentate product purity.

An example of the embodiment of the invention is further described with reference to Figure 3. In the example, the biogas containing acid gases is treated to generate Renewable Natural Gas (RNG). The feed raw biogas (301) with an initial CO₂ content of 38.2% (mol.), O₂ content 0.37% (mol.), N₂ content 0.37% (mol.), H₂O content 7.28% (mol.), H₂S 450 ppmv and balance methane, of a 1250 m³/h volumetric flow at normal atmospheric pressure conditions, is treated by the method of the instant invention to remove carbon dioxide and hydrogen sulfide with a simultaneous oxygen content reduction to generate pipeline quality methane. The feed biogas stream is pre-compressed to 0.2 barg by a gas blower (302) with absorbed electrical power consumption of 15 kW. The raw feed biogas is combined with the membrane permeate stream (303) to generate a combined feed flow of 1358 m³/h (304) that is directed to a pretreatment system. The combined stream (304) is treated in the desulfurization unit (305) by an application of a biological desulfurization process wherein the major fraction of H₂S is oxidized to sulfur and a minor fraction is oxidized to sulfuric acid. The biological desulfurization process simultaneously reduces H₂S and oxygen concentrations due to H₂S oxidation that consumes oxygen. Residual oxygen content after the biological desulfurization is 0.18% mol and the residual H₂S content is 20 ppmv. The thus treated gas (306) is combined with the recycled methane-containing stream (307) generated in the first flash regeneration unit (321) and fed to the process unit (308) wherein the gas is cooled down to 10 °C and the condensate is separated to form the flow stream (309) to the intake of the compressor (310). The gas is compressed in the compressor (310) to 10 barg, the compressed gas is treated in an aftercooler to reduce the temperature to 35°C, and condensate is removed to form the first effluent stream (311). The compression step consumed about 170 kW of absorbed electrical power.

The first effluent stream (311) is further treated in the absorber unit (312) to remove a bulk amount of acid gas to generate the second effluent stream (313) of a reduced CO₂ and H₂S content. The gas is flown counter-current to the flow of the absorption liquid (314) to maximize the mass transfer efficiency. The absorption liquid was comprised of 12.6% (mol) methyl diethanolamine, MDEA, and 2.1% (mol) piperazine (PZ) in water. The initial absorption liquid contained 6.19 mass % CO₂ and the liquid temperature was 38°C. Following CO₂ absorption, a rich absorbent liquid stream (320) is formed that contains 10.4 mass % of CO₂ and trace amounts of hydrogen sulfide. The rich absorption liquid is discharged from the absorption system at a temperature of 59°C. The second effluent stream (313) contains 1 ppm H₂S and 1.9% mol CO₂. The effluent stream is in compliance with the product gas acid gas content specification but the gas is wet and does not comply with the product oxygen content concentration which is limited to 0.3% mol.

The second effluent gas stream (313) is further treated in a dehumidification refrigeration unit (334) wherein the gas is cooled down to 10 °C, followed by condensate separation, to form the partly dehumidified gas stream (315). The partially dehumidified stream is superheated by the recuperative heater (316) to form an intake stream (317) to the membrane unit (318). The membrane unit (318) removes parts of the remaining CO₂, O₂, H₂S and water vapor. The level of impurities in the retentate product gas (319) is further reduced with CO₂ concentration reduced to 0.56% (mol.), O₂ concentration to 0.21 % mol., with the product gas water dew point of -10°C, and with no detectable traces of H₂S. The methane content of RNG is 98.52%. The permeate stream (303) with a volumetric flow of 110 m³/h and increased oxygen content of 0.45% O₂ is recycled to the intake of the biological desulfurization unit (305) to satisfy the biological oxygen demand.

The rich absorbent liquid (320) is demethanized in a flash regeneration unit (321) by way of pressure reduction to the pressure of 2 barg to recover more than 90% of methane dissolved in the absorbent liquid. Methane and carbon dioxide containing gas (307) with a volumetric flow of 10 m³/h are recycled to the inlet of the dehumidification unit (308).

The pressure of the demethanized absorbent liquid (322) is further reduced to slightly above the atmospheric pressure level and the liquid is heated utilizing supplemental heat generated by the compressor by heat exchanger (323) to compensate for evaporative cooling. The heating power of 60kW to the heat exchanger (323) is provided by the compressor cooling system and is sufficient to compensate for evaporative heat cooling and to maintain the temperature of the partially regenerated absorbent stream (324) at the level necessary to maintain the temperature of the absorbent stream (314) not lower than 3 °C above the temperature of the first effluent stream (311). The temperature of the stream (324) is at 54 °C.

The final regeneration of the liquid absorbent is performed in the regeneration unit (325) where the absorbent liquid pressure is reduced to the atmospheric pressure. To increase acid gas removal efficiency, ambient temperature air (326) at a flow rate of 500 m³/h is flowed counter-current to the liquid flow to maximize the mass transfer efficiency.

The lean absorption liquid (327) with a temperature of 38 °C is pumped by the recirculation pump (328) at a rate of 20 tons per hour with electrical energy consumption of 10 kW. The thus generated lean absorbent stream (329) is treated in an adsorption unit (330) to remove any degradation products prior to returning the treated stream (314) to the top of the absorption unit (312).

The air and acid gas mixture, stream (331) is treated in an activated carbon adsorber (332) to capture residual H₂S and other trace impurities before utilization of the clean discharged gas stream (333) by a greenhouse facility.

The instant invention provides an overall reduction in the purification process energy consumption as compared to the state-of-the-art standalone membrane process, which has a permeate recycle as high as 50% of the raw biogas. Additional embodiments of the instant invention provide a further reduction in separation energy consumption by improved utilization of the secondary compressor heat and deploying an optimized multi-stage flash-regeneration system.

Some biogas streams may contain oxygen in addition to other contaminants. Oxygen removal may be required to prevent absorbent degradation and/or to meet pipeline specification. Oxygen removal can be further carried out utilizing a thermal oxidizer unit. Catalytic combustion of oxygen utilizing the thermal oxidizer unit can be carried out upstream of the carbon dioxide absorption unit or downstream of the absorption or membrane unit.

The present invention is described with reference to Figures and a number of embodiments, which should not be construed as limiting the present invention.

## Claims

1. A process for the purification of a raw feed gas stream containing hydrocarbons and acid gas, said process comprising the steps of:
(i) compressing said raw feed gas stream in a compressor to a pressure from 3 to 25 barg followed by aftercooling and condensate separation, thereby forming a first effluent stream;
(ii) passing said first effluent stream into a gas absorption unit, wherein a lean absorbent removes a portion of acid gas from said first effluent stream, thereby forming a second effluent stream having a lower acid gas content than said first effluent stream and a rich in acid gas absorbent stream;
(iii) passing said second effluent stream to a membrane separation unit containing a polymeric membrane selective for removal of acid gas and water, wherein said membrane separation unit generates a retentate hydrocarbon gas stream and a permeate reject stream enriched in acid gas and water vapor;
(iv) passing said rich in acid gas absorbent stream to an absorbent regeneration unit to generate a lean absorbent stream depleted of acid gas by way of pressure reduction combined with gas stripping by a non-acid gas component containing gas at substantially atmospheric pressure or a sub-atmospheric pressure thus forming a third effluent stream of acid gas and sweep gas mixture;
(v) passing said lean absorbent stream to said gas absorption unit;
(vi) passing said permeate reject stream to a front end of the compressor, wherein the permeate reject stream is mixed with said raw feed gas stream; and
(vii) collecting said retentate hydrocarbon gas stream as a product stream.

2. The process of claim 1 wherein said acid gas contains carbon dioxide, hydrogen sulfide or a mixture thereof.

3. The process of claim 1 wherein the raw feed gas stream is a natural gas, biogas, or associated natural gas.

4. The process of claim 1 wherein the third effluent stream of acid gas and sweep gas mixture is treated to generate carbon dioxide product and/or to remove hydrogen sulfide.

5. The process of claim 1 wherein the non-acid gas component containing gas is air, nitrogen, or nitrogen enriched gas.

6. The process of claim 1 wherein the second effluent stream is treated to lower a water vapor dew point or to remove contaminants that otherwise affect membrane performance prior to treatment by said membrane separation unit.

7. The process of claim 1 wherein the second effluent stream is passed through a heater prior to being directed to the membrane separation unit.

8. The process of claim 1 wherein the raw feed gas stream is treated to remove contaminants prior or following compressing the raw feed gas stream in a compressor.

9. The process of claim 8 wherein hydrogen sulfide is removed by a biological treatment process.

10. The process of claim 9 wherein the said polymeric membrane is selective for oxygen removal, the retentate stream is depleted of oxygen and the permeate reject stream is enriched in oxygen, and the reject permeate stream is recycled to the biological treatment process to increase beneficial oxygen content in a biological hydrogen sulfide removal pretreatment unit.

11. The process of claim 1 wherein the rich in acid gas absorbent stream is regenerated in a two-stage flash regeneration system where a first flash regeneration stage is carried out at above atmospheric pressure, between 1 to 10 barg, and a second flash regeneration stage is combined with gas stripping by a non-acid gas component containing gas and is carried out at substantially atmospheric pressure or a sub-atmospheric pressure, wherein a first gas stream generated in the first flash regeneration stage containing methane and acid gas is recycled to the front end of the compressor to increase methane recovery and wherein a second gas stream generated in the second flash regeneration stage is vented or treated to recover carbon dioxide as a product.

12. The process of claim 11 wherein the rich in acid gas absorption stream is regenerated in flash regeneration systems without external heat energy supply.

13. The process of claim 11 wherein the rich in acid gas absorption stream is regenerated in a flash regeneration system with an application of additional secondary heat from a compressor cooling system or another heat source and wherein the lean absorption stream is cooled before being recycled to the gas absorption unit.

14. The process of claim 1 wherein at least a fraction of the lean absorption stream is treated to remove contaminants and absorbent degradation products prior to the lean absorption stream being introduced into the gas absorption unit.

15. The process of claim 1 wherein a fraction of the retentate hydrocarbon gas stream generated by the membrane separation unit in step (iii) is directed to the permeate reject stream of the membrane unit and a remaining fraction of the retentate hydrocarbon gas stream is collected as a methane product stream.
